# EUROPÄISCHE PATENTSCHRIFT

(11) **EP 3 659 887 B1**
(45) Veröffentlichungstag und Bekanntmachung des Hinweises auf die Patenterteilung: **06.10.2021**
(21) Anmeldenummer: 19208532.2
(22) Anmeldetag: 12.11.2019
(51) Int. Cl.: B60W 40/13

(54) **VERFAHREN UND VORRICHTUNG ZUM SCHÄTZEN EINES BELADUNGSZUSTANDS EINES FAHRZEUGS**
METHOD AND DEVICE FOR ESTIMATING A LOAD STATE OF A VEHICLE
PROCÉDÉ ET DISPOSITIF D'ESTIMATION D'UN ÉTAT DE CHARGE D'UN VÉHICULE

(30) Priorität: 28.11.2018 DE 102018220476
(43) Veröffentlichungstag der Anmeldung: 03.06.2020
(73) Patentinhaber: Volkswagen Aktiengesellschaft, 38440 Wolfsburg (DE)
(72) Erfinder: Göricke, Bastian, 38446 Wolfsburg (DE); Meyer, Daniel, 38112 Braunschweig (DE); Klandt, Jesko, 13088 Berlin (DE)

(56) Entgegenhaltungen:
- WO-A1-03/029764
- WO-A1-2006/010456
- DE-A1-102004 035 578
- DE-A1-102009 036 440

## Beschreibung

Die Erfindung betrifft ein Verfahren und eine Vorrichtung zum Schätzen eines Beladungszustands eines Fahrzeugs.

Das Fahrverhalten eines Fahrzeugs, insbesondere ein Lenkverhalten des Fahrzeugs, ändert sich in Abhängigkeit eines Beladungszustands des Fahrzeugs. Daher ist es wünschenswert, einen Beladungszustand des Fahrzeugs zu kennen. Es ist bekannt, einen Beladungszustand auf Grundlage von Messwerten eines Reifendrucksensors oder eines Sensors an einem Stoßdämpfer des Fahrzeugs zu schätzen.

Aus der EP 2 169 364 A2 ist ein Verfahren zur Bestimmung des Gewichts eines Fahrzeugs sowie eine Messeinheit zur Durchführung dieses Verfahrens bekannt. In einem ersten Schritt wird die auf die Räder des Fahrzeuges wirkende Umfangskraft oder eines damit in Zusammenhang stehenden Parameters erfasst. In einem zweiten Schritt wird zumindest eine Auswirkung auf das Fahrzeug erfasst, welche durch die einwirkende Umfangskraft begründet ist. Schließlich wird in einem dritten Schritt das Fahrzeuggewicht aus den erfassten Daten berechnet.

Aus der DE 10 2014 211 273 A1 ist ein Fahrzeugmassenschätzungsverfahren zum Schätzen der Masse eines Fahrzeugs bekannt. Hierbei werden für das Fahrzeug mehrere Modelle zum Schätzen der Masse erstellt, mit den Modellen wird je mindestens ein am Fahrzeug messbarer Parameter geschätzt, am Fahrzeug wird der messbare Parameter gemessen und es erfolgt eine Bewertung der Modelle mittels eines Vergleichs des geschätzten und des gemessenen Parameters.

Aus der DE 101 60 059 A1 sind ein System und ein Verfahren zur Beurteilung des Beladungszustandes eines Kraftfahrzeugs mit wenigstens einem Rad bekannt. Das System umfasst wenigstens eine Sensoreinrichtung, welche eine zum Fahrzeuggewicht proportionale Größe erfasst und ein die Größe repräsentierendes Signal ausgibt, und eine Beurteilungseinrichtung, welche das die erfasste Größe repräsentierende Signal verarbeitet und nach Maßgabe des Ergebnisses der Verarbeitung einen Beladungszustand des Fahrzeugs beurteilt. Die Sensoreinrichtung ist eine dem wenigstens einen Rad zugeordnete Radkraft-Sensoreinrichtung, welche eine im Wesentlichen zwischen Fahruntergrund und Radaufstandsfläche wirkende Radaufstandskraft des jeweiligen Rades als die zum Fahrzeuggewicht proportionale Größe erfasst.

Aus der DE 10 2004 035 578 A1 ist eine Stabilisierungsvorrichtung zur Fahrstabilisierung eines Fahrzeugs bekannt, mit Erfassungsmitteln zum Erfassen von Messwerten, die zur Ermittlung eines Beladungszustandes des Fahrzeugs geeignet sind. Weiter sind Auswertemittel zur Bildung eines den Beladungszustand des Fahrzeugs charakterisierenden charakteristischen Maßes anhand der Messwerte vorhanden. Dabei weist die Vorrichtung Auswahlmittel zur Auswahl und/oder Skalierung eines Regelungs-Parametersatzes in Abhängigkeit des charakteristischen Maßes auf, wobei die Auswahlmittel zur Übermittlung des ausgewählten und/oder skalierten Parametersatzes an eine Fahrstabilisierungsregelungseinrichtung des Fahrzeugs ausgestattet sind, wobei die Fahrzeugstabilisierungsregeleinrichtung das Fahrzeug in Abhängigkeit des ausgewählten und/oder skalierten Parametersatzes stabilisiert. Vorzugsweise umfasst das charakteristische Maß mindestens einen Wankmomentkennwert und/oder mindestens einen Eigenfrequenzkennwert des Fahrzeugs. Dabei ist weiter vorgesehen, dass die Stabilisierungsvorrichtung eine Spektralanalyse eines oder mehrerer Messwerte durchführt. Beispielsweise analysieren die Auswertemittel das Wankratensignal spektral, z.B. durch eine Fourieranalyse, wobei diese ein charakteristisches Spektrum ermitteln. Um beispielsweise durch Lenkbewegungen des Fahrers verursachte Fehlinterpretationen der Spektren zu vermeiden, analysiert ein Stabilisierungsmodul zusätzlich ein Lenkwinkelsignal. Dabei ermitteln die Auswertemittel beispielsweise einen Lenkwinkelgradienten. Nur wenn die Lenkwinkeländerung ein vorbestimmtes Maß nicht überschreitet, wird das jeweilige Spektrum als gültig anerkannt bzw. der aus dem Spektrum abgeleitete Eigenfrequenzwert als charakteristisches Maß verwendet. Alternativ unterziehen die Auswertemittel das Lenkwinkelsignal einer Spektralanalyse zur Erzeugung eines Lenkspektrums mit Maxima. Wenn die Maxima des Lenkspektrums unterhalb einer vorzugsweise frequenzabhängigen Grenz-Amplitude liegen, werden das zugehörige Spektrum bzw. die Eigenfrequenzwerte als gültig erkannt. Aus der DE 10 2009 036 440 A sind ein Verfahren und eine Vorrichtung zur Ermittlung eines Beladungszustandes eines Fahrzeugs bekannt, wobei der Beladungszustand anhand des Eigenlenkverhaltens des Fahrzeugs ermittelt wird.

Der Erfindung liegt die Aufgabe zu Grunde, ein Verfahren und eine Vorrichtung zum Schätzen eines Beladungszustands eines Fahrzeugs zu schaffen, bei denen ein Beladungszustand verbessert geschätzt werden kann.

Die Aufgabe wird erfindungsgemäß durch ein Verfahren mit den Merkmalen des Patentanspruchs 1 und eine Vorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum Schätzen eines Beladungszustands eines Fahrzeugs zur Verfügung gestellt, umfassend die folgenden Schritte: zeitaufgelöstes Erfassen oder Empfangen mindestens einer Lenkstellgröße mittels einer Eingangseinrichtung, Ableiten mindestens eines Frequenzspektrums aus der erfassten oder empfangenen mindestens einen zeitaufgelösten Lenkstellgröße mittels einer Analyseeinrichtung, Bestimmen eines Beladungszustands des Fahrzeugs mittels einer Klassifizierungseinrichtung, wobei hierzu die Klassifizierungseinrichtung das jeweilige Frequenzspektrum klassifiziert und diesem jeweils eine Beladungszustandsklasse zuordnet, Ausgeben einer resultierenden Beladungszustandsklasse als Beladungszustandssignal mittels einer Ausgabeeinrichtung.

Ferner wird eine Vorrichtung zum Schätzen eines Beladungszustands eines Fahrzeugs geschaffen, umfassend eine Eingangseinrichtung, wobei die Eingangseinrichtung derart ausgebildet ist, mindestens eine Lenkstellgröße zeitaufgelöst zu erfassen oder zu empfangen, eine Analyseeinrichtung, wobei die Analyseeinrichtung derart ausgebildet ist, mindestens ein Frequenzspektrum aus der mindestens einen erfassten oder empfangenen zeitaufgelösten Lenkstellgröße abzuleiten, eine Klassifizierungseinrichtung, wobei die Klassifizierungseinrichtung derart ausgebildet ist, einen Beladungszustand des Fahrzeugs zu bestimmen, wobei hierzu die Klassifizierungseinrichtung das jeweilige Frequenzspektrum klassifiziert und diesem jeweils eine Beladungszustandsklasse zuordnet, und eine Ausgabeeinrichtung, wobei die Ausgabeeinrichtung derart ausgebildet ist, eine resultierende Beladungszustandsklasse als Beladungszustandssignal auszugeben.

Ein Grundgedanke der Erfindung ist, auf Grundlage von mindestens einer zeitaufgelöst erfassten oder empfangenen Lenkstellgröße einen Beladungszustand des Fahrzeugs in Form einer Beladungszustandsklasse zu schätzen. Hierbei liegt der Erfindung insbesondere die Erkenntnis zugrunde, dass Lenkstellgrößen, insbesondere ein aufzubringendes Lenkmoment einer Lenkunterstützung, bei einer Änderung des Beladungszustands variieren. Diese Variation äußert sich in einer Änderung von Frequenzeigenschaften im Signal der zugehörigen Lenkstellgröße, insbesondere in einem Lenkmomentsignal, welche sich in einem Frequenzspektrum der zeitaufgelösten Lenkstellgröße abbildet. Auf Grundlage eines aus der mindestens einen zeitaufgelöst erfassten oder empfangenen Lenkstellgröße, insbesondere aus einem Lenkmoment, abgeleiteten Frequenzspektrums kann dann durch Klassifizieren eine zugehörige Beladungszustandsklasse zugeordnet werden und über diese Zuordnung ein Beladungszustand des Fahrzeugs geschätzt werden.

Als Lenkstellgröße kann alternativ oder zusätzlich beispielsweise auch ein zum Betreiben einer elektromechanischen Lenkung notwendiger Strom verwendet werden. Dieser Strom ist vom Lenkmoment abhängig und kann daher ebenfalls als Lenkstellgröße mittels des beschriebenen Verfahrens ausgewertet werden.

Der Vorteil der Erfindung ist, dass keine zusätzlichen Sensoren im Fahrzeug verbaut werden müssen, da die mindestens eine Lenkstellgröße in der Regel durch eine Steuerung des Lenksystems bereitgestellt werden kann. Hierdurch können Kosten und Aufwand eingespart werden.

Ein Frequenzspektrum wird jeweils für einen vorgegebenen Zeitbereich bestimmt. Die Zeitbereiche liegen hierbei insbesondere im Bereich von einigen Minuten, beispielsweise kann ein Zeitbereich von 5 Minuten, 10 Minuten oder 15 Minuten verwendet werden. Die Frequenzspektren werden insbesondere mittels einer diskreten Fourier-Transformation bzw. Fast-Fourier-Transformation abgeleitet, das heißt es erfolgt eine Transformation von einer Zeitdarstellung in einen Frequenzraum, sodass nach der Transformation einzelne Frequenzanteile in der mindestens einen zeitaufgelösten Lenkstellgröße unterschieden und analysiert werden können.

Insbesondere ist vorgesehen, dass zumindest zwei Beladungszustandsklassen unterschieden werden, das heißt es wird unterschieden zwischen den Beladungszuständen "nicht beladen" und "beladen". Es kann jedoch auch vorgesehen sein, dass weitere Beladungszustände unterschieden werden und hierfür entsprechende Beladungszustandsklassen definiert werden. Auf diese Weise kann nicht nur eine Aussage darüber getroffen werden, ob das Fahrzeug beladen ist oder nicht, sondern auch darüber, wie groß eine Beladung des Fahrzeugs ist.

In einer Ausführungsform ist vorgesehen, dass in zumindest einer Lernphase die folgenden Schritte durchgeführt werden: Bereitstellen eines Lerndatensatzes, umfassend mindestens eine zeitaufgelöste Lenkstellgröße und Zeitbereichen der mindestens einen Lenkstellgröße zugeordnete als Beladungszustandsklassen ausgedrückte Beladungszustände des Fahrzeugs, Ableiten von Frequenzspektren aus der im Lerndatensatz bereitgestellten mindestens einen Lenkstellgröße mittels der Analyseeinrichtung, Anlernen der Klassifizierungseinrichtung auf Grundlage der abgeleiteten Frequenzspektren und den jeweils zugehörigen Beladungszustandsklassen, sodass die Klassifizierungseinrichtung nach dem Anlernen aus mindestens einer zeitaufgelösten Lenkstellgröße abgeleitete Frequenzspektren nach Beladungszustandsklassen klassifizieren kann.

In einer entsprechenden Ausführungsform der Vorrichtung ist vorgesehen, dass die Analyseeinrichtung ferner derart ausgebildet ist, Frequenzspektren aus mindestens einer bereitgestellten Lenkstellgröße eines Lerndatensatzes abzuleiten, wobei der Lerndatensatz die mindestens eine zeitaufgelöste Lenkstellgröße und Zeitbereichen der mindestens einen zeitaufgelösten Lenkstellgröße zugeordnete als Beladungszustandsklassen ausgedrückte Beladungszustände des Fahrzeugs umfasst, und wobei die Klassifizierungseinrichtung ferner derart ausgebildet ist, auf Grundlage der abgeleiteten Frequenzspektren und den jeweils zugehörigen Beladungszustandsklassen angelernt werden zu können, sodass die Klassifizierungseinrichtung nach dem Anlernen aus mindestens einer zeitaufgelösten Lenkstellgröße abgeleitete Frequenzspektren nach Beladungszustandsklassen klassifizieren kann.

Es kann hierbei vorgesehen sein, dass zumindest eine erste Lernphase werkseitig vor einem ersten Ausliefern des Fahrzeugs an einen Endkunden durchgeführt wird, sodass das Verfahren und die Vorrichtung kundenseitig sofort eingesetzt werden können.

Es kann insbesondere vorgesehen sein, dass zum Anlernen und Klassifizieren ein Verfahren des Maschinenlernens verwendet wird. Hierbei kann vorgesehen sein, ein Künstliches Neuronales Netz zu verwenden.

In einer weiteren Ausführungsform ist vorgesehen, dass zum Klassifizieren ein statistisches Verfahren verwendet wird.

In einer entsprechenden Ausführungsform der Vorrichtung ist vorgesehen, dass die Klassifizierungseinrichtung derart ausgebildet ist, zum Klassifizieren ein statistisches Verfahren zu verwenden.

In einer weiterbildenden Ausführungsform ist vorgesehen, dass zum Klassifizieren eine Partial Least Square Discriminant Analysis (PLSDA) verwendet wird.

In einer entsprechenden Ausführungsform der Vorrichtung ist vorgesehen, dass die Klassifizierungseinrichtung derart ausgebildet ist, zum Klassifizieren eine Partial Least Square Discriminant Analysis (PLSDA) zu verwenden.

In einer Ausführungsform ist vorgesehen, dass die abgeleiteten Frequenzspektren vor dem Klassifizieren mittels einer Filtereinrichtung gefiltert werden. Hierdurch können lediglich Frequenzbereiche betrachtet werden, die sich besonders gut zum Klassifizieren eignen. Eine Auswahl der entsprechenden Frequenzen kann im Rahmen der Lernphase anhand des Lerndatensatzes bestimmt werden, indem Frequenzen ausgewählt werden, bei denen das Klassifizierungsergebnis besonders hohe Trefferquoten liefert.

In einer entsprechenden Ausführungsform der Vorrichtung ist vorgesehen, dass die Vorrichtung eine Filtereinrichtung umfasst, wobei die Filtereinrichtung derart ausgebildet ist, die abgeleiteten Frequenzspektren vor dem Klassifizieren zu filtern.

In einer weiteren Ausführungsform ist vorgesehen, dass mindestens ein Fahrparameter des Fahrzeugs auf Grundlage des Beladungszustandssignals angepasst wird. Insbesondere kann ein solcher Fahrparameter beispielsweise eine Ausrollweglänge eines Abstandsregeltempomaten (Adaptive Cruise Control, ACC) oder eine Kennlinie eines Stoßdämpfers sein. Der mindestens eine Fahrparameter wird dann in Abhängigkeit der bestimmten Beladungszustandsklasse angepasst, sodass sich ein Fahrverhalten des Fahrzeugs aus Sicht eines Fahrers idealerweise trotz eines geänderten Beladungszustands nicht ändert.

Teile der Vorrichtung können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Schätzen eines Beladungszustands eines Fahrzeugs;
- Fig. 2: eine schematische Darstellung eines aus einem zeitaufgelösten Lenkmomentsignal abgeleiteten Frequenzspektrums;
- Fig. 3a: Vorhersagen der Klassifizierungseinrichtung und zugehörige Label des Beladungszustands für einen ersten Teil eines Lerndatensatzes nach dem Anlernen;
- Fig. 3b: eine aus den in der Fig. 3a gezeigten Ergebnissen abgeleitete Receiver-Operating-Characteristic-(ROC)-Kurve;
- Fig. 4a: Vorhersagen der Klassifizierungseinrichtung und zugehörige Label des Beladungszustands für einen zweiten Teil des Lerndatensatzes nach dem Anlernen;
- Fig. 4b: eine aus den in der Fig. 4a gezeigten Ergebnissen abgeleitete Receiver-Operating-Characteristic-(ROC)-Kurve.

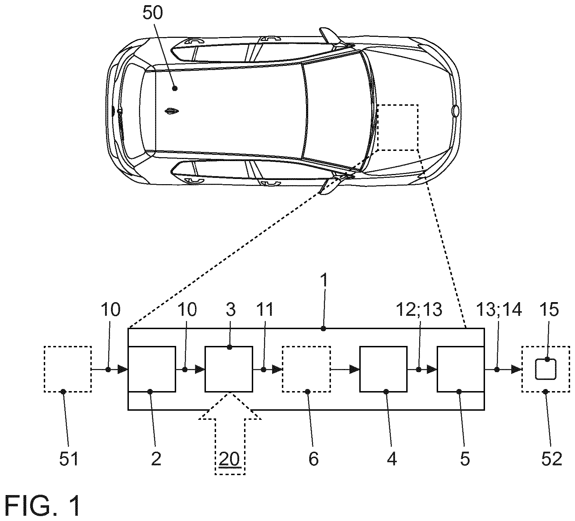

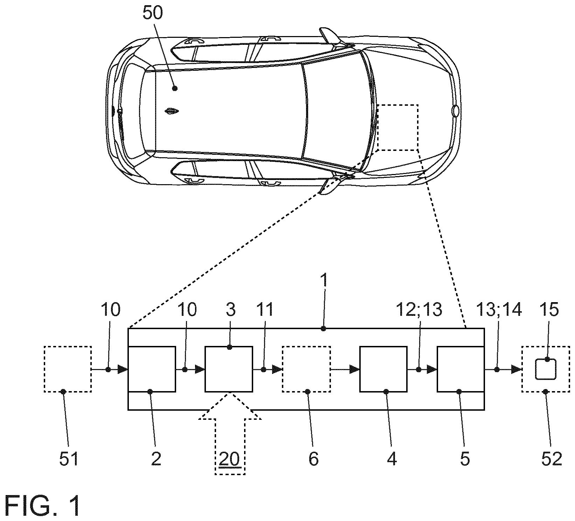

In Fig. 1 ist eine schematische Darstellung einer Ausführungsform der Vorrichtung 1 zum Schätzen eines Beladungszustands 12 eines Fahrzeugs 50 gezeigt. Die Vorrichtung 1 ist beispielsweise in einem Fahrzeug 50 angeordnet. Die Vorrichtung 1 umfasst eine Eingangseinrichtung 2, eine Analyseeinrichtung 3, eine Klassifizierungseinrichtung 4 und eine Ausgabeeinrichtung 5.

Der Eingangseinrichtung 2 wird eine zeitaufgelöste Lenkstellgröße 10 zugeführt. Im gezeigten Ausführungsbeispiel sind dies zeitaufgelöste Messwerte eines Lenkmoments, welche als Lenkmomentsignal beispielsweise von einer Steuerung einer elektrisch angetriebenen Servolenkung 51 (Electric Power Steering, EPS) des Fahrzeugs 50 bereitgestellt werden. Die Eingangseinrichtung 2 empfängt die zeitaufgelöste Lenkstellgröße 10 und führt diese der Analyseeinrichtung 3 zu.

Die Analyseeinrichtung 3 leitet aus der zeitaufgelösten Lenkstellgröße 10, das heißt den zeitaufgelösten Messwerten des Lenkmoments, mindestens ein Frequenzspektrum 11 ab. Dies erfolgt durch Auswählen eines vorgegeben Zeitraums, welcher einige Minuten, beispielsweise 5, 10 oder 15 Minuten, betragen kann. Für diesen Zeitraum wird die zeitaufgelöste Lenkstellgröße mittels einer Fast-Fourier-Transformation (FTF) in den Frequenzraum transformiert, sodass einzelne Frequenzanteile mit ihrem Beitrag zum Gesamtsignal identifiziert werden können. Das Vorgehen wird anschließend für weitere Zeiträume wiederholt. Hierbei kann der betrachtete Zeitraum rollierend über die einzelnen Werte der zeitaufgelösten Lenkstellgröße verschoben werden oder es werden aufeinander folgende Zeiträume ohne einen Überlapp verwendet. Die mittels der Transformation abgeleiteten Frequenzspektren 11 werden fortlaufend der Klassifizierungseinrichtung 4 zugeführt.

Die Klassifizierungseinrichtung 4 bestimmt durch Auswerten jeweils eines der Frequenzspektren 11 einen aktuellen Beladungszustand 12 des Fahrzeugs. Hierzu klassifiziert die Klassifizierungseinrichtung 4 das jeweilige Frequenzspektrum 11 und ordnet diesem hierzu eine Beladungszustandsklasse 13 zu.

Die zugeordnete Beladungszustandsklasse 13 wird anschließend als Beladungszustandssignal 14 ausgegeben. Das Beladungszustandssignal 14 kann anschließend einer Fahrzeugsteuerung 52 zugeführt werden und zum Anpassen mindestens eines Fahrparameters 15 verwendet werden. Beispielsweise kann als Fahrparameter 15 eine Ausrollweglänge eines Abstandsregeltempomaten (Adaptive Cruise Control, ACC) oder eine Kennlinie von Stoßdämpfern angepasst werden. Ein Fahrverhalten des Fahrzeugs aus Sicht eines Fahrers kann hierdurch trotz eines geänderten Beladungszustands 12 konstant gehalten werden.

Insbesondere ist vorgesehen, dass der Beladungszustand 12 fortlaufend neu bestimmt wird, wobei stets aktuelle zeitaufgelöste Werte der Lenkstellgröße 10, insbesondere des Lenkmoments, verwendet werden.

Es kann in zumindest einer Lernphase vorgesehen sein, dass die Analyseeinrichtung 3 ferner derart ausgebildet ist, Frequenzspektren 11 aus mindestens einer bereitgestellten Lenkstellgröße 10 eines Lerndatensatzes 20 abzuleiten, wobei der Lerndatensatz 20 die mindestens eine zeitaufgelöste Lenkstellgröße 10 und Zeitbereichen der mindestens einen zeitaufgelösten Lenkstellgröße 10 zugeordnete als Beladungszustandsklassen 13 ausgedrückte Beladungszustände 12 des Fahrzeugs 50 umfasst, und wobei die Klassifizierungseinrichtung 4 ferner derart ausgebildet ist, auf Grundlage der abgeleiteten Frequenzspektren 11 und den jeweils zugehörigen Beladungszustandsklassen 13 angelernt werden zu können, sodass die Klassifizierungseinrichtung 4 nach dem Anlernen aus mindestens einer zeitaufgelösten Lenkstellgröße 10 abgeleitete Frequenzspektren 11 nach Beladungszustandsklassen 13 klassifizieren kann. Die Lernphase wird zumindest ein erstes Mal vor einem Inbetriebnehmen der Vorrichtung 1, beispielsweise vor einer Auslieferung des Fahrzeugs an einen Endkunden, durchgeführt. Es kann jedoch vorgesehen sein, dass die Lernphase nach der Inbetriebnahme erneut durchgeführt bzw. wiederholt wird, beispielsweise mit einem anderen Lerndatensatz 20. Ferner kann vorgesehen sein, dass die Klassifizierungseinrichtung 4 derart ausgebildet ist, zum Klassifizieren ein statistisches Verfahren zu verwenden.

Insbesondere kann vorgesehen sein, dass die Klassifizierungseinrichtung 4 derart ausgebildet ist, zum Klassifizieren eine Partial Least Square Discriminant Analysis (PLSDA) zu verwenden.

Es kann zusätzlich vorgesehen sein, dass die Vorrichtung 1 eine Filtereinrichtung 6 umfasst, wobei die Filtereinrichtung 6 derart ausgebildet ist, die abgeleiteten Frequenzspektren 11 vor dem Klassifizieren zu filtern. Hierdurch können zum Klassifizieren gezielt nur die Frequenzen oder Frequenzbereiche verwendet werden, mit denen sich beim Klassifizieren besonders gute Ergebnisse erzielen lassen.

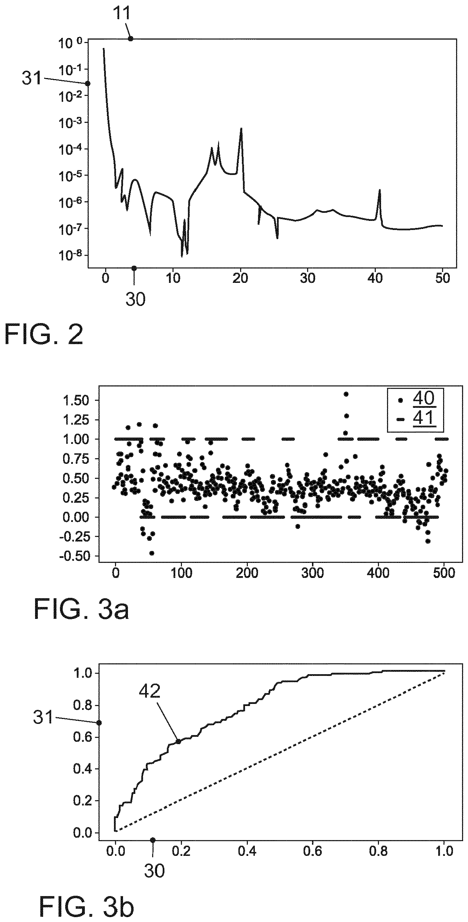

In Fig. 2 ist eine schematische Darstellung eines Frequenzspektrums 11 dargestellt, das aus einem zeitaufgelösten Lenkmomentsignal abgeleitet wurde. Auf der x-Achse 30 ist eines Frequenz von 0 bis 50 Hz dargestellt. Auf der y-Achse 31 ist ein Anteil am Spektrum auf einer logarithmischen Skala dargestellt. Auf Grundlage eines solchen Frequenzspektrums 11 bzw. der darin enthaltenen Informationen über die einzelnen Frequenzanteile wird das Klassifizieren durchgeführt.

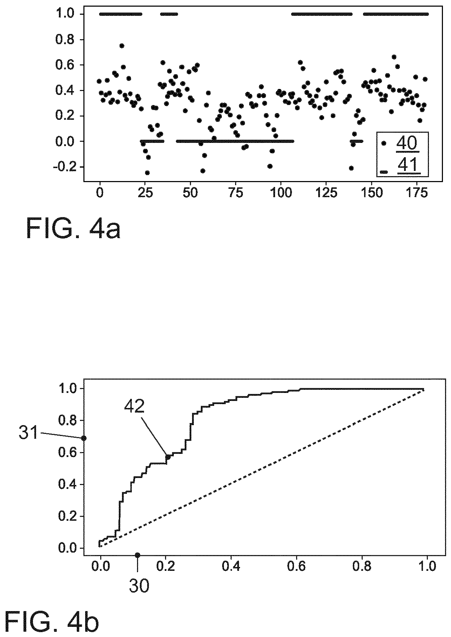

In den Figuren 3a und 3b sowie 4a und 4b sind Ergebnisse von mittels PLSDA gelernten Gewichtungen für eine zweidimensionale Einbettung eines von einer Steuerung einer elektrisch angetriebenen Servolenkung (Electric Power Steering, EPS) bereitgestellten zeitaufgelösten Lenkmomentsignals gezeigt. Hierbei wurde ein Lerndatensatz verwendet, in dem als Lenkstellgröße zeitaufgelöste Lenkmomentmesswerte der Servolenkung verwendet wurden, wobei den einzelnen Lenkmomentmesswerten jeweils eine binäre Beladungszustandsklasse zugeordnet wurde, das heißt in dem gezeigten Beispiel wurden lediglich die Klassen "nicht beladen" und "beladen" unterschieden.

Der als Wahrheit ("ground truth") betrachtete Lerndatensatz wurde hierbei in zwei Teile unterteilt, wobei einer erster Teil (mit R² = 0,2157) zum Anlernen der Klassifikationseinrichtung mittels PLSDA verwendet wurde. Ein zweiter Teil (mit R² = 0,038009) wurde anschließend zum Testen der angelernten Klassifizierungseinrichtung verwendet.

Die Fig. 3a zeigt Vorhersagen 40 der Klassifizierungseinrichtung für den ersten Teil des Lerndatensatzes, nachdem das Anlernen erfolgt ist. Ferner sind in der Fig. 3a die zugeordneten Beladungszustandsklassen als Labels 41 aus dem Lerndatensatz gezeigt (eine Position des Labels 41 oben/unten bedeutet hierbei "beladen"/"nicht beladen"). Eine zur Beurteilung der Qualität der Klassifikation nach dem Anlernen abgeleitete Receiver-Operating-Characteristic-(ROC)-Kurve 42 ist in der Fig. 3b dargestellt, wobei die x-Achse 30 die Falsch-Positiv-Rate und die y-Achse 31 die Richtig-Positiv-Rate bezeichnet. Die Fläche unter der ROC-Kurve 42 erreicht hierbei einen Wert von 0,79.

Die Fig. 4a zeigt Vorhersagen 40 der Klassifizierungseinrichtung für den zweiten Teil des Lerndatensatzes, nachdem das Anlernen erfolgt ist. Ferner sind in der Fig. 4a die zugeordneten Beladungszustandsklassen als Labels 41 aus dem Lerndatensatz gezeigt (eine Position des Labels 41 oben/unten bedeutet hierbei "beladen"/"nicht beladen"). Eine zur Beurteilung der Qualität der Klassifikation nach dem Anlernen abgeleitete Receiver-Operating-Characteristic-(ROC)-Kurve 42 ist in der Fig. 4b dargestellt, wobei die x-Achse 30 die Falsch-Positiv-Rate und die y-Achse 31 die Richtig-Positiv-Rate bezeichnet. Die Fläche unter der ROC-Kurve 42 erreicht beim zweiten Teil des Lerndatensatzes, das heißt bei den Daten, die nicht zum Anlernen verwendet wurden, einen Wert von 0,81.

Die in den Figuren 3a, 3b, 4a und 4b gezeigten Ergebnisse zeigen, dass mittels des vorgeschlagenen Verfahrens und der vorgeschlagenen Vorrichtung ein Schätzen eines Beladungszustands eines Fahrzeugs möglich ist. Da Lenkmomentsignale beispielsweise von einer Lenksteuerung zeitaufgelöst bereitgestellt werden und daher keine weiteren Sensoren notwendig sind, können das Verfahren und die Vorrichtung kostengünstig in einem Fahrzeug eingesetzt werden, um einen Beladungszustand zu schätzen.

### Bezugszeichenliste

- 1: Vorrichtung
- 2: Eingangseinrichtung
- 3: Analyseeinrichtung
- 4: Klassifizierungseinrichtung
- 5: Ausgabeeinrichtung
- 6: Filtereinrichtung
- 10: Lenkstellgröße
- 11: Frequenzspektrum
- 12: Beladungszustand
- 13: Beladungszustandsklasse
- 14: Beladungszustandssignal
- 15: Fahrparameter
- 20: Lerndatensatz
- 30: x-Achse
- 31: y-Achse
- 40: Vorhersage
- 41: Label
- 42: ROC-Kurve
- 50: Fahrzeug
- 51: Servolenkung
- 52: Fahrzeugsteuerung

## Patentansprüche

1. Verfahren zum Schätzen eines Beladungszustands (12) eines Fahrzeugs (50), umfassend die folgenden Schritte:
zeitaufgelöstes Erfassen oder Empfangen mindestens einer Lenkstellgröße (10) mittels einer Eingangseinrichtung (2), **gekennzeichnet durch**, Ableiten mindestens eines Frequenzspektrums (11) aus der erfassten oder empfangenen mindestens einen zeitaufgelösten Lenkstellgröße (10) mittels einer Analyseeinrichtung (3), Bestimmen eines Beladungszustands (12) des Fahrzeugs (50) mittels einer Klassifizierungseinrichtung (4), wobei hierzu die Klassifizierungseinrichtung (4) das jeweilige Frequenzspektrum klassifiziert und diesem jeweils eine Beladungszustandsklasse (13) zuordnet,
Ausgeben einer resultierenden Beladungszustandsklasse (13) als Beladungszustandssignal (14) mittels einer Ausgabeeinrichtung (5).

2. Verfahren nach Anspruch 1, **dadurch gekennzeichnet, dass** in zumindest einer Lernphase die folgenden Schritte durchgeführt werden:
Bereitstellen eines Lerndatensatzes (20), umfassend mindestens eine zeitaufgelöste Lenkstellgröße (10) und Zeitbereichen der mindestens einen Lenkstellgröße (10) zugeordnete als Beladungszustandsklassen (13) ausgedrückte Beladungszustände (12) des Fahrzeugs (50),
Ableiten von Frequenzspektren (11) aus der im Lerndatensatz (20) bereitgestellten mindestens einen Lenkstellgröße (10) mittels der Analyseeinrichtung (3),
Anlernen der Klassifizierungseinrichtung (4) auf Grundlage der abgeleiteten Frequenzspektren (11) und den jeweils zugehörigen Beladungszustandsklassen (13),
sodass die Klassifizierungseinrichtung (4) nach dem Anlernen aus mindestens einer zeitaufgelösten Lenkstellgröße (10) abgeleitete Frequenzspektren (11) nach Beladungszustandsklassen (13) klassifizieren kann.

3. Verfahren nach einem der vorangegangenen Ansprüche, **dadurch gekennzeichnet, dass** zum Klassifizieren ein statistisches Verfahren verwendet wird.

4. Verfahren nach Anspruch 3, **dadurch gekennzeichnet, dass** zum Klassifizieren eine Partial Least Square Discriminant Analysis (PLSDA) verwendet wird.

5. Verfahren nach einem der vorangegangenen Ansprüche, **dadurch gekennzeichnet, dass** die abgeleiteten Frequenzspektren (11) vor dem Klassifizieren mittels einer Filtereinrichtung (6) gefiltert werden.

6. Verfahren nach einem der vorangegangenen Ansprüche, **dadurch gekennzeichnet, dass** mindestens ein Fahrparameter (15) des Fahrzeugs (50) auf Grundlage des Beladungszustandssignals (14) angepasst wird.

7. Vorrichtung (1) zum Schätzen eines Beladungszustands (12) eines Fahrzeugs (50), umfassend:
eine Eingangseinrichtung (2), wobei die Eingangseinrichtung (2) derart ausgebildet ist, mindestens eine Lenkstellgröße (10) zeitaufgelöst zu erfassen oder zu empfangen, **gekennzeichnet durch**,
eine Analyseeinrichtung (3), wobei die Analyseeinrichtung (3) derart ausgebildet ist, mindestens ein Frequenzspektrum (11) aus der mindestens einen erfassten oder empfangenen zeitaufgelösten Lenkstellgröße (10) abzuleiten,
eine Klassifizierungseinrichtung (4), wobei die Klassifizierungseinrichtung (4) derart ausgebildet ist, einen Beladungszustand (12) des Fahrzeugs (50) zu bestimmen, wobei hierzu die Klassifizierungseinrichtung (4) das jeweilige Frequenzspektrum klassifiziert und diesem jeweils eine Beladungszustandsklasse (13) zuordnet, und
eine Ausgabeeinrichtung (5), wobei die Ausgabeeinrichtung (5) derart ausgebildet ist,
eine resultierende Beladungszustandsklasse (13) als Beladungszustandssignal (14) auszugeben.

8. Vorrichtung (1) nach Anspruch 7, **dadurch gekennzeichnet, dass**
die Analyseeinrichtung (3) ferner derart ausgebildet ist, Frequenzspektren (11) aus mindestens einer bereitgestellten Lenkstellgröße (10) eines Lerndatensatzes (20) abzuleiten, wobei der Lerndatensatz (20) die mindestens eine zeitaufgelöste Lenkstellgröße (10) und Zeitbereichen der mindestens einen zeitaufgelösten Lenkstellgröße (10) zugeordnete als Beladungszustandsklassen (13) ausgedrückte Beladungszustände (12) des Fahrzeugs (50) umfasst, und
wobei die Klassifizierungseinrichtung (4) ferner derart ausgebildet ist, auf Grundlage der abgeleiteten Frequenzspektren (11) und den jeweils zugehörigen Beladungszustandsklassen (13) angelernt werden zu können, sodass die Klassifizierungseinrichtung (4) nach dem Anlernen aus mindestens einer zeitaufgelösten Lenkstellgröße (10) abgeleitete Frequenzspektren (11) nach Beladungszustandsklassen (13) klassifizieren kann.

9. Vorrichtung (1) nach Anspruch 7 oder 8, **dadurch gekennzeichnet, dass** die Klassifizierungseinrichtung (4) derart ausgebildet ist, zum Klassifizieren ein statistisches Verfahren zu verwenden.

10. Vorrichtung (1) nach Anspruch 9, **dadurch gekennzeichnet, dass** die Klassifizierungseinrichtung (4) derart ausgebildet ist, zum Klassifizieren eine Partial Least Square Discriminant Analysis (PLSDA) zu verwenden.

## Claims

1. Method for estimating a loading state (12) of a vehicle (50), comprising the following steps:
capturing or receiving at least one manipulated steering variable (10) in a time-resolved manner by means of an input device (2), **characterized by** deriving at least one frequency spectrum (11) from the captured or received at least one time-resolved manipulated steering variable (10) by means of an analysis device (3),
determining a loading state (12) of the vehicle (50) by means of a classification device (4), wherein the classification device (4) classifies the respective frequency spectrum for this purpose and respectively assigns a loading state class (13) to said frequency spectrum,
outputting a resulting loading state class (13) as a loading state signal (14) by means of an output device (5).

2. Method according to Claim 1, **characterized in that** the following steps are carried out in at least one training phase:
providing a training data set (20) comprising at least one time-resolved manipulated steering variable (10) and loading states (12) of the vehicle (50) which are expressed as loading state classes (13) and are assigned to time ranges of the at least one manipulated steering variable (10),
deriving frequency spectra (11) from the at least one manipulated steering variable (10) provided in the training data set (20) by means of the analysis device (3),
training the classification device (4) on the basis of the derived frequency spectra (11) and the respectively associated loading state classes (13),
with the result that, after training, the classification device (4) can classify frequency spectra (11) derived from at least one time-resolved manipulated steering variable (10) according to loading state classes (13).

3. Method according to one of the preceding claims, **characterized in that** a statistical method is used for classification.

4. Method according to Claim 3, **characterized in that** a Partial Least Square Discriminant Analysis (PLSDA) is used for classification.

5. Method according to one of the preceding claims, **characterized in that** the derived frequency spectra (11) are filtered by means of a filter device (6) before classification.

6. Method according to one of the preceding claims, **characterized in that** at least one driving parameter (15) of the vehicle (50) is adapted on the basis of the loading state signal (14).

7. Apparatus (1) for estimating a loading state (12) of a vehicle (50), comprising:
an input device (2), wherein the input device (2) is designed to capture or receive at least one manipulated steering variable (10) in a time-resolved manner, **characterized by**
an analysis device (3), wherein the analysis device (3) is designed to derive at least one frequency spectrum (11) from the at least one captured or received time-resolved manipulated steering variable (10),
a classification device (4), wherein the classification device (4) is designed to determine a loading state (12) of the vehicle (50), wherein the classification device (4) classifies the respective frequency spectrum for this purpose and respectively assigns a loading state class (13) to said frequency spectrum, and
an output device (5), wherein the output device (5) is designed to output a resulting loading state class (13) as a loading state signal (14).

8. Apparatus (1) according to Claim 7, **characterized in that** the analysis device (3) is also designed to derive frequency spectra (11) from at least one provided manipulated steering variable (10) in a training data set (20), wherein the training data set (20) comprises the at least one time-resolved manipulated steering variable (10) and loading states (12) of the vehicle (50) which are expressed as loading state classes (13) and are assigned to time ranges of the at least one time-resolved manipulated steering variable (10), and
wherein the classification device (4) is also designed to be able to be trained on the basis of the derived frequency spectra (11) and the respectively associated loading state classes (13), with the result that, after training, the classification device (4) can classify frequency spectra (11) derived from at least one time-resolved manipulated steering variable (10) according to loading state classes (13).

9. Apparatus (1) according to Claim 7 or 8, **characterized in that** the classification device (4) is designed to use a statistical method for classification.

10. Apparatus (1) according to Claim 9, **characterized in that** the classification device (4) is designed to use a Partial Least Square Discriminant Analysis (PLSDA) for classification.

## Revendications

1. Procédé d'estimation d'un état de charge (12) d'un véhicule (50), comprenant l'étape suivante consistant à :
au moyen d'un dispositif d'entrée (2), détecter ou recevoir, de manière résolue dans le temps, au moins une grandeur de réglage de direction (10),
**caractérisé par** les étapes consistant à
au moyen d'un dispositif d'analyse (3), dériver au moins un spectre de fréquence (11) à partir de ladite au moins une grandeur de réglage de direction (10) résolue dans le temps, détectée ou reçue,
au moyen d'un dispositif de classification (4), déterminer un état de charge (12) du véhicule (50), le dispositif de classification (4) classifiant à cet effet le spectre de fréquence respectif et l'associant respectivement à une classe d'état de charge (13),
au moyen d'un dispositif de sortie (5), sortir une classe d'état de charge (13) résultante sous forme de signal d'état de charge (14).

2. Procédé selon la revendication 1, **caractérisé en ce que** dans au moins une phase d'apprentissage, les étapes suivantes sont exécutées :
fournir un jeu de données d'apprentissage (20) comprenant au moins une grandeur de réglage de direction (10) résolue dans le temps et des états de charge (12) du véhicule (50) associés à des périodes de ladite au moins une grandeur de réglage de direction (10) et exprimés sous forme de classes d'état de charge (13),
au moyen du dispositif d'analyse (3), dériver des spectres de fréquence (11) à partir de ladite au moins une grandeur de réglage de direction (10) fournie dans le jeu de données d'enregistrement (20),
entraîner le dispositif de classification (4) sur la base des spectres de fréquence (11) dérivés et des classes d'état de charge (13) respectivement associées de sorte qu'après l'entraînement, le dispositif de classification (4) peut classifier en classes d'état de charge (13) des spectres de fréquence (11) dérivés à partir d'au moins une grandeur de réglage de direction (10) résolue dans le temps.

3. Procédé selon l'une quelconque des revendications précédentes, **caractérisé en ce qu'**un procédé statistique est utilisé pour la classification.

4. Procédé selon la revendication 3, **caractérisé en ce qu'**une analyse discriminante par les moindres carrés partiels (PLSDA) est utilisée pour la classification.

5. Procédé selon l'une quelconque des revendications précédentes, **caractérisé en ce que** les spectres de fréquence (11) dérivés sont filtrés au moyen d'un dispositif de filtrage (6) avant la classification.

6. Procédé selon l'une quelconque des revendications précédentes, **caractérisé en ce qu'**au moins un paramètre de conduite (15) du véhicule (50) est adapté sur la base du signal d'état de charge (14).

7. Dispositif (1) d'estimation d'un état de charge (12) d'un véhicule (50), comprenant :
un dispositif d'entrée (2), le dispositif d'entrée (2) étant réalisé de façon à détecter ou à recevoir, de manière résolue dans le temps, au moins une grandeur de réglage de direction (10),
**caractérisé par**
un dispositif d'analyse (3), le dispositif d'analyse (3) étant réalisé de façon à dériver au moins un spectre de fréquence (11) à partir de ladite au moins une grandeur de réglage de direction (10) résolue dans le temps, détectée ou reçue,
un dispositif de classification (4), le dispositif de classification (4) étant réalisé de façon à déterminer un état de charge (12) du véhicule (50), le dispositif de classification (4) classifiant à cet effet le spectre de fréquence respectif et l'associant respectivement à une classe d'état de charge (13), et
un dispositif de sortie (5), le dispositif de sortie (5) étant réalisé de façon à sortir une classe d'état de charge (13) résultante sous forme de signal d'état de charge (14).

8. Dispositif (1) selon la revendication 7, **caractérisé en ce que** le dispositif d'analyse (3) est en outre réalisé de façon à dériver des spectres de fréquence (11) à partir d'au moins une grandeur de réglage de direction (10) fournie d'un jeu de données d'apprentissage (20), le jeu de données d'apprentissage (20) comprenant ladite au moins une grandeur de réglage de direction (10) résolue dans le temps et des états de charge (12) du véhicule (50) associés à des périodes de ladite au moins une grandeur de réglage de direction (10) et exprimés sous forme de classes d'état de charge (13), et
le dispositif de classification (4) étant en outre réalisé de façon à pouvoir être entraîné sur la base des spectres de fréquence (11) dérivés et des classes d'état de charge (13) respectivement associées de sorte qu'après l'entraînement, le dispositif de classification (4) peut classifier en classes d'état de charge (13) des spectres de fréquence (11) dérivés à partir d'au moins une grandeur de réglage de direction (10) résolue dans le temps.

9. Dispositif (1) selon la revendication 7 ou 8, **caractérisé en ce que** le dispositif de classification (4) est réalisé de façon à utiliser un procédé statistique pour la classification.

10. Dispositif (1) selon la revendication 9, **caractérisé en ce que** le dispositif de classification (4) est réalisé de façon à utiliser une analyse discriminante par les moindres carrés partiels (PLSDA) pour la classification.
